# EUROPEAN PATENT APPLICATION

(11) **EP 2 053 121 A1**
(43) Date of publication of application: **29.04.2009**
(21) Application number: 07020632.1
(22) Date of filing: 22.10.2007
(51) Int. Cl.: C12G 3/08, B01D 61/08

(54) **Methods and an apparatus for controlling concentrations of substances within wine**

(71) Applicant: Inoxpa, S.A., 1720 Banyoles (ES)
(72) Inventor: Waldelich, Gunter, 72074 Tübingen (DE)
(74) Representative: Hössle Kudlek & Partner

(57) **Abstract**

The invention relates to the treatment of intestinal barrier function disorders involving administration of a selected colostrum comprising more than 25 weight % undenatured immunoglobulin G (IgG) based on the weight of total protein content of said colostrum to a subject.
The invention further relates to compositions comprising colostrum and indigestible dietary fibres wherein the colostrum comprises more than 25 weight % undenatured immunoglobulin G based on the weight of total protein content of said colostrum.

## Description

### Technical Field

This description refers to an apparatus and methods for testing and controlling the concentration of substances in wine such as solute gases, alcohol and acetic acid. In particular, the proposed methods and the proposed apparatus make it possible that the concentration of volatile substances of the wine, such as alcohol and acetic acid, can be reduced and the concentration of solute gases can be increased or degraded.

### Description of the related art

In wine production, the gas CO₂ in particular is widely used for preservation of wine quality.

For example, CO₂ is used for prevention of an oxidation of wine. Tanks are pressurized with CO₂ in order to minimise contact of wine with oxygen (O₂). This is especially relevant for white wine after an alcoholic fermentation in order to improve the storage and ripening characteristics.

Furthermore, CO₂ is used for removing residuals from filter devices and apparatuses. It is also utilised for artificial carbonation (so-called "Imprägnierverfahren") for a production of (semi-) sparkling wine. For an application with high quality semi-sparkling wine made from selected grapes (a so called "Qualitätsperlwein b. A.") it is only allowable to use endogenous CO₂ which furthermore must be obtained from a process of alcoholic fermentation.

CO₂ is further used in order to remove disconcerting or unbalanced notes or aromas in wine. The wine is flushed at intervals by using CO₂ which is dispensed by sintered means of a frit. Components which cause the unbalanced notes or aromas will be attached to small CO₂ bubbles and will be removed together with the bubbles from the wine.

CO₂ is also used for a pre-evacuation of wine bottles in order to reduce oxidation of wine which occurs during the process of bottling wine, particularly white wine. However, popular apparatuses for bottling use a sub-pressure bottling method which causes the wine to come in contact with atmospheric oxygen of the surrounding air. The bottling of white wine, avoiding the contact between wine and atmospheric oxygen is a further attempt to optimise the quality of the wine.

Furthermore, during the procedure of corking wine bottles, the empty spaces within the bottles can be provided with CO₂ in order to reduce the pressure inside of the bottles.

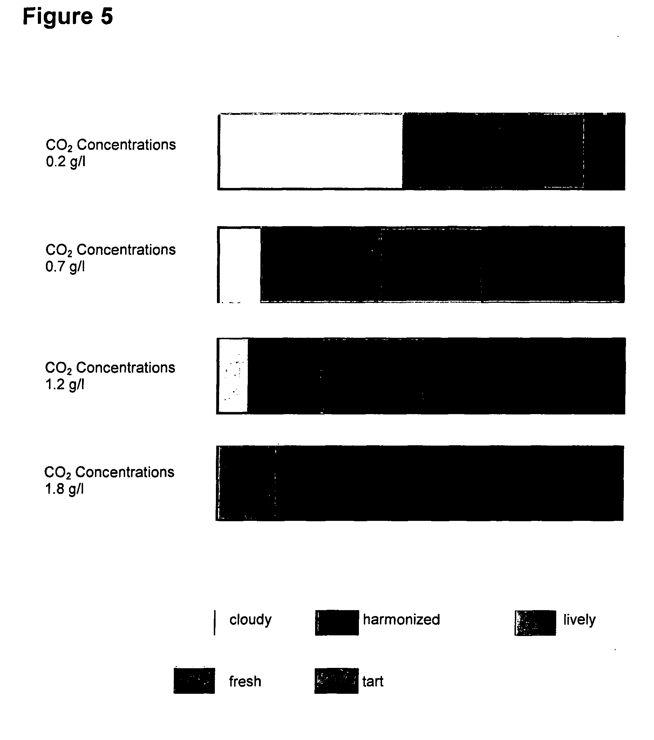

As described above, CO₂ is widely used in the field of wine production. However, the concentration of CO₂ in wine significantly influences its taste. The relevance of the fact as to whether the CO₂ concentration of the wine exists naturally or CO₂ is applied during processing the wine is not of importance. Influencing the taste depends on the structure of the wine as well as on the concentration of acid in the wine. This effect is achieved in different ways depending on the kind of wine. For illustration, Figure 5 shows a correlation between the CO₂ concentration of wine and the attribute of the sensory perception: cloudy, harmonised, lively, fresh und tart. In conclusion, low CO₂ concentrations as well as high CO₂ concentrations are not desired.

Generally, advantageous CO₂ concentrations of white wines are arranged within a range of 0.6 to 0.8 g/l. By way of exception, a concentration up to 1.0 g/l can also provide a lively and fresh sensory perception. However, the sensory perception itself is influenced by e.g. regional influences of consumers which effect the respective sensory perceptions.Consumer research concludes that, sensory perceptions and respective assessments are dependent on the consumer market. Research of the German market indicates that the respective consumers prefer a fresh and lively sensory perception. In contrast thereto, the consumers in England have a pronounced sensibility for CO₂ within white wine which results in their assessment of the wine being negative.

In contrast to white wine, the CO₂ concentration of red whine should be lower than 0.5 g/l to provide a full-bodied and soft sensory perception. The natural CO₂ concentrations in red wines vary significantly depending on the way of production and consequent treatment.

Red wine which is produced using the classical process of mash fermentation (the so called "Maischegärung") is generally provided with low natural CO₂ concentrations, as the paring of the berries and pulp parts widely extract CO₂ during fermentation. If the wine is further stored within oak-wooden barrels, the CO₂ concentrations are further reduced.

If the red wine is produced using a thermal process of heating the wine for a short period, the obtained red must (so-called "roter Most") will be fermented and stored within stainless steel tanks.

Many different kinds of red wines provide increased CO₂ concentrations in the range of 0.6 to 0.8 g/l at the time of bottling. This can be a problem for two reasons: Firstly the CO₂ becomes visible while opening the bottle and filling a glass. This causes the appearance of bubbles which build foam. Secondly, the sensory perception tends towards the attributes fresh and tart which are not intended for red wines.

Under normal pressure about 1.8g CO₂ can be solubilised in 1 litre of wine at 20°C. For a still wine (so-called "Stillwein") a limit of 2.0 g/l of CO₂ is given by law. If pressure is increased, more CO₂ can be solubilised in the fluid. In semi-sparkling wines about 3.7 to 5.2 g/l CO₂ can be solubilised at an overpressure of about 1.5 to 2.5 bar. In contrast thereto, sparkling-wine is provided with a CO₂ concentration of about 6.5 to 9.8 g/l at an overpressure higher than 3.5 bar.

The characteristics of solubilising CO₂ within wine are different to those within water. As wine contains a plurality of substances, in particular water and alcohol, especially the alcohol has great influence on the characteristics and a smaller amount of CO₂ can be solubilised in wine than in water. Thus, CO₂ in wine is outgasing easier than CO₂ which is dissolved in water. As a result, it is harder to keep CO₂ in wine, especially while bottling sparkling or semi-sparkling wine, when foaming occurs. The effect of foaming can be reduced for sparkling wine which is produced by means of a second barm fermentation. Up until now, it has been assumed that CO₂ is better and more effectively solubilised because of a slower release of the barms in the wine and therefore, the CO₂ is outgassed more slowly.

However, it has not been possible yet to insert CO₂ to wine while providing the same characteristics without using the second barm fermentation.

As can be concluded from the above, the aim is to test and to control the concentrations of substances in wine, such as the CO₂ concentration, in order to influence the taste and the quality of wine. Furthermore, there is a need for a method to reduce the outgassing of CO₂ and to keep CO₂ in wine without the need for a second barm fermentation.

### Summary

It is an object to provide methods and an apparatus for testing and controlling the concentration of volatile substances within wine such as solute gases, alcohol and acetic acid. Furthermore, it is desired to produce wine where foaming during bottling is avoided and a slow outgassing with small bubbles takes place without the need for a second barm fermentation. As a result of the fact that no distillation is needed, a loss of aromas can thus be avoided.

Therefore, a method is provided for exchanging substances which are in a gaseous state between at least two fluids, namely a first fluid and a second fluid. The method comprises the steps of:
using wine as the first fluid,
using CO₂ as the second fluid,
adjusting a pressure difference between at least one first flow channel of the first fluid and at least one second flow channel of the second fluid for allowing CO₂ to pass through membranes into the first fluid,
measuring a CO₂ concentration within the first fluid by means of at least one CO₂-measuring sensor,
adjusting an amount of CO₂ which is passing through the membranes by regulating mass flows, temperatures and/or pressures of wine and CO₂, respectively.

As described below in further detail, the method can be performed for example by means of an apparatus for controlling concentrations of substances within the at least two fluids and for exchanging substances between the at least two fluids. The apparatus can comprise semi-permeable membranes which seperate the at least two fluids and which are designed in such a way that only substances can pass through pores of the membranes which are in a gaseous state of aggregation. The at least one CO₂-measuring sensor can be arranged, for example, at at least one appropriate position within the apparatus.

According to another aspect, the method can comprise the further step of automatically adjusting the amount of CO₂ by a controlling system by comparing the values measured by the CO₂-measuring sensor with corresponding predefined specifications.

The method can also comprise the step of adjusting a lower pressure to the second fluid than to the first fluid to cause solute CO₂ in the first fluid to pass through the membranes into the second fluid.

According to another aspect the method can comprise the step of adjusting a higher pressure to the second fluid than to the first fluid to cause CO₂ to pass through the membranes from the second fluid into the at least one first flow channel of the first fluid.

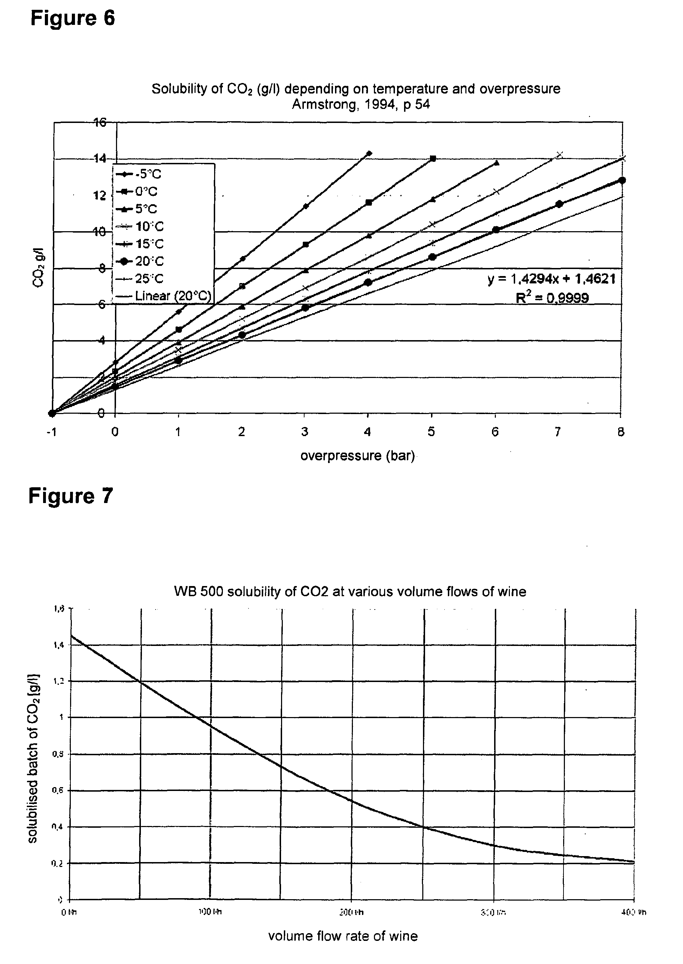

CO₂ which is used as the second fluid can be taken for example from gas bottles and can be provided at one side of the membrane with an absolute value of pressure which is for example 0.1 to 0.2 bar above the pressure within the wine which can be used as the first fluid and which passes by at an opposing second side of the membrane. By adjusting the pressure difference between the at least two fluids the method described above causes CO₂ to pass through the pores of the membrane into the wine. The small pressure difference is sufficient to cause CO₂ to pass through the membrane and to solubilise CO₂ within the wine. By adjusting the mass flow of the second fluid (CO₂) the amount of CO₂ which passes into the wine can be controlled in such a way that CO₂ is solubilised within the wine without forming CO₂ bubbles. After reaching saturation of CO₂ within the wine, as shown in figure 6, CO₂ bubbles can occur as a result of excessive CO₂. In order to visualize the bubbles, an inspection glass can be arranged, for example, near an output unit for the wine.

However, the amount of CO₂ passing through the membranes can not only be controlled by adjusting the mass flow of the second fluid but also by adjusting the mass flow of the wine which is used as the first fluid, as indicated in figure 7. The adjustment of the mass flows can be performed automatically via the controlling system as already mentioned above which exactly controls the amount of solute CO₂ within the wine.

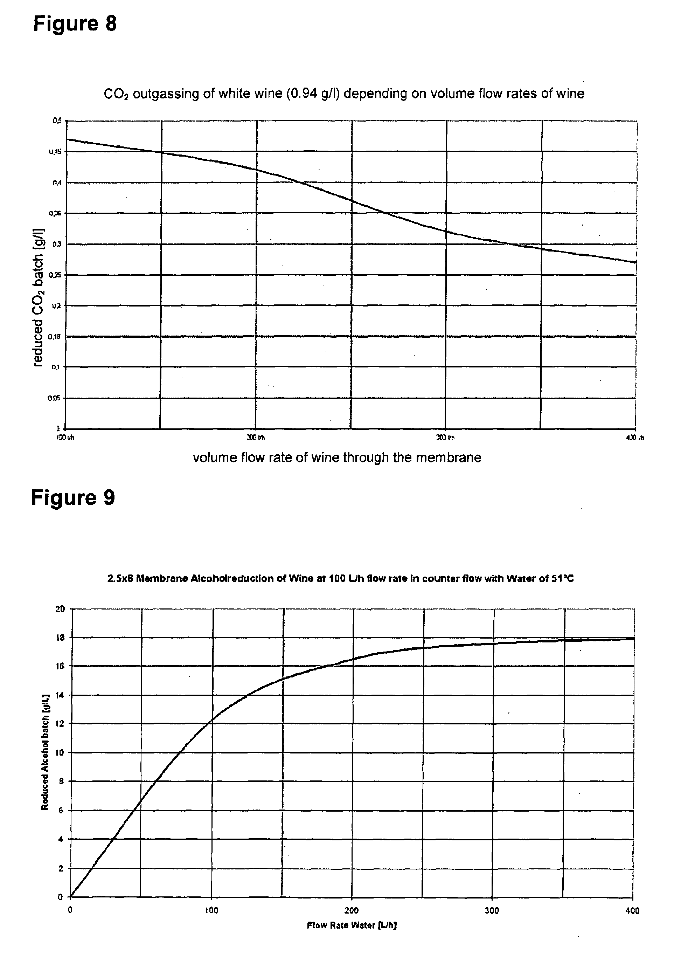

If the pressure difference between the first fluid and the second fluid is adjusted in such a way that the wine as the first fluid is provided with an absolute value of pressure which is for example 0.05 bar above the pressure of CO₂ as the second fluid, solute CO₂ within the wine is passing through the membrane into the second fluid. Such an outgassing of wine can be controlled by adjusting the pressures of the two fluids, the temperature of the wine and the mass flow of the wine. The resulting degree of outgassing can be measured for example via the CO₂ measuring sensor, as shown in figure 8. If the pressure difference is too high the outgassing of the wine is affected negatively, as the amount of CO₂ which can be solubilised within the wine increases at higher pressure according to "Henry's law" concerning partial pressures of dissolved gases within fluids. As the solubility of CO₂ within wine is lower than within water, wine can be outgased more easily than water.

Furthermore, a method is provided for exchanging substances being in a gaseous state between at least two fluids, namely a first fluid and a second fluid. The method comprises the steps of:
using wine as the first fluid,
using water as the second fluid, and
adjusting a temperature and/or a mass flow of the first fluid to allow alcohol within the first fluid to pass through membranes into the second fluid.

This means that the concentration of alcohol within the wine as the first fluid can be reduced, if water is used as the second fluid. As only substances can pass through the membranes which are in a gaseous state of aggregation, the alcohol has to be provided in gaseous state for passing through. As there is a concentration gradient for the alcohol between the wine and the water, i.e. between the first and the second fluid, a diffusion pressure occurs which forces alcohol to pass into the water. As the alcohol has to be provided in a gaseous state of aggregation to pass through the membranes, the speed of diffusion can be increased by increasing the temperature of the wine. Also an adjustment of mass flows of the wine and the water influence the diffusion of the alcohol, but not as effective as adjusting the temperature of the wine.

This method can be performed by means of the apparatus for controlling concentrations of substances within the at least two fluids and for exchanging substances between the at least two fluids as mentioned above and as described below in further detail.

According to another aspect the method can comprise the step of performing an aroma analysis via a "Bukanter" aroma sampling system for verifying the concentration of alcohol within the first fluid and for adjusting the temperature and/or the mass flow of the first fluid.

A "Bukanter" aroma sampling system is already known for example from DE 10 2006 008 200 and can be used for aroma sampling. Aroma samples can be extracted for example at an input section and at an output section of the apparatus "in-line" and during operation, respectively. Aroma substances are extracted from the samples to analyse them by means of gas chromatography. The "Bukanter" system can either be used for sampling a limited and defined number of aromas or an entire spectrum of aromas of the wine. The analysis of the aromas can be used for example for verification of the concentration of alcohol and CO₂. Thus, the reduction of alcohol as well as the increase or degradation of the CO₂ concentration can be tested and the adjustments for controlling the apparatus can be verified. The verification can be used to avoid a loss of aromas, which will occur, if temperatures and pressures are too high. As different grape varieties have different spectrums of aromas, it is not possible to provide a global adjustment which is optimised for each grape variety.

Furthermore, a method is provided for exchanging substances being in a gaseous state between at least two fluids, namely a first fluid and a second fluid. The method comprises the steps of:
using wine as the first fluid,
using CO₂ or water as the second fluid,
adjusting a lower pressure to the second fluid than to the first fluid to cause solute acetic acid within the first fluid to pass through membranes into the second fluid.
and/or
adjusting a temperature and/or a mass flow of the first fluid to allow acetic acid within the first fluid to pass through membranes into the second fluid.

This means that a reduction of the concentration of acetic acid can be performed in substantially two ways. As the acetic acid is extremely volatile its concentration can be reduced by either applying a pressure to the second fluid which is lower than a pressure applied to the first fluid or using water as the second fluid. If water is used, there is a concentration gradient of the acetic acid between the wine and the water, i.e. between the first fluid and the second fluid, and a diffusion pressure occurs which forces the acetic acid to pass into the water. As the acetic acid has to be provided in a gaseous state of aggregation to pass through the membranes, the speed of diffusion can be increased by increasing the temperature of the wine. Also an adjustment of mass flows of the wine and the water are influencing the diffusion of the acetic acid, but not as effectively as adjusting the temperature of the wine.

The method described above can be performed by means of the apparatus for controlling concentrations of substances within the at least two fluids and for exchanging substances between the at least two fluids as already mentioned above and as described below in further detail.

If a gaseous fluid or particularly CO₂ is used as the second fluid, the pressure difference between the first fluid and the second fluid is adjusted in such a way that the wine is provided with an absolute value of pressure which is for example 0.05 bar above the pressure of CO₂ as the second fluid. Thus, solute CO₂ within the wine is passing through the membrane into the second fluid as already mentioned above. A concentration of acetic acid within the wine can also be reduced in this way and the vapour pressure of the acetic acid enhances the effect of diffusion or outgassing, respectively. Thus, the method for reducing the CO₂ concentration can also be used to reduce the acetic acid concentration. Moreover, the effect can also be used for sulphurous acid, which is applied to the wine to reduce oxidation.

The method for reducing acetic acid can comprise the step of performing an aroma analysis via a "Bukanter" aroma sampling system for verifying the concentration of acetic acid within the first fluid and for adjusting the pressure and/or the temperature and/or the mass flow of the first fluid.

Furthermore, an apparatus is provided for controlling concentrations of substances within fluids and exchanging substances between at least two fluids, namely a first fluid and a second fluid. The apparatus comprises
at least one input unit and at least one output unit for each of the at least two fluids, respectively, and
a number of flow channels which are connecting the at least one input unit and the at least one output unit of each of the at least two fluids, respectively. The apparatus also comprises
semi-permeable membranes, which constitute walls of the flow channels to separate the flow channels and which are arranged between the flow channels of the at least two fluids to build an exchanging surface for the substances to be exchanged between the at least two fluids. The membranes are hydrophobic and exclusively permeable for substances which are in a gaseous state. Furthermore, a pressure difference is adjustable between the respective flow channels of the at least two fluids.

For example, membranes can be used which are produced for a filtering of drinking water or for clean rooms. They are offered for example by the company "Membrana" (www.membrana.de). The membranes are hydrophobic and have a low surface energy. They are provided with pores which can have, for example, a diameter of about 0,03µm. As a result only gases which have small sized molecules can pass through the pores of the membranes. By means of such membranes, wine can be produced where foaming during bottling is avoided and a slow outgassing with small bubbles takes place without the need for second barm fermentation. In contrast thereto, dissolving CO₂ within water by means of a membrane does not show such effects and does not differ from other known methods (e.g. artificial carbonisation). CO₂ being solubilised in water by means of the membranes is rather outgassing as easily as CO₂ being solubilised using the other methods.

According to another aspect, the apparatus substantially can have a cylindrical form and the flow channels can be arranged to substantially guide the at least two fluids along a longitudinal axis of the apparatus.

According to a further aspect, the at least one input unit and the at least one output unit for each of the at least two fluids, respectively, can be arranged at opposing front sides of the cylindrical apparatus.

Furthermore, the number of flow channels for at least one of the at least two fluids can be formed as tubes and walls of the tubes can be formed by the membranes.

For example, the tubes can have an inner diameter of about 0,2mm. However, any other appropriate inner diameter can be used.

According to another aspect, at least the first fluid of the at least two fluids flows around the tubes.

According to a further aspect, the membranes consist of polypropylene.

According to still another aspect, mass flows of the at least two fluids are independently adjustable.

According to still another aspect, temperatures of the at least two fluids are independently adjustable.

According to a further aspect, the apparatus comprises a CO₂ measuring sensor. For example, the CO₂ measuring sensor can be arranged at the output unit of the apparatus for the first fluid to measure the CO₂ concentration of the first fluid at the output unit.

According to another aspect, the apparatus comprises a "Bukanter" aroma sampling system for automated "in-line"-sampling for an aroma analysis.

According to another aspect, the apparatus comprises a controlling system for controlling the exchange of substances between the at least two fluids and the controlling system is connected to the CO₂ measuring sensor and the "Bukanter" aroma sampling system.

According to a further aspect, the first fluid is wine and the second fluid can be chosen from a group comprising CO₂, water or vacuum.

Vacuum as used herein means that a gas is used as the second fluid, such as CO₂ or any other appropriate gas, and a second pressure is applied to the gas or the second fluid, respectively, which is below a first pressure which is applied to the first fluid. Thus, a pressure difference between the at least two fluids can be provided.

Furthermore, a device is provided for controlling concentrations of substances within fluids and exchanging substances between fluids comprising a plurality of apparatuses as described within the present description, wherein the apparatuses can be connected to each other in a serial and/or parallel arrangement.

Thus, using the plurality of apparatuses the first fluid can be processed within a plurality of steps each being performed in a separate apparatus. For example, in a first step a concentration of oxygen can be reduced and in a following second step CO₂ can be added as described above. Such an order of steps might be important, as oxygen lowers the absorption of CO₂ within the wine as the first fluid.

Further features and embodiments will become apparent from the description and the accompanying drawings.

It will be understood that the features mentioned above and those described hereinafter can be used not only in the combination specified but also in other combinations or on their own, without departing from the scope of the present disclosure.

Various implementations are schematically illustrated in the drawings by means of an embodiment by way of example and are hereinafter explained in detail with reference to the drawings. It is understood that the description is in no way limiting on the scope of the present disclosure and is merely an illustration of a preferred embodiment.

### Brief description of the drawings

- Figure 1: shows a perspective view of an apparatus for controlling concentrations of substances within fluids and exchanging substances between fluids according to the present description.
- Figure 2: shows a longitudinal cross section of a tube whose walls are formed by a membrane.
- Figure 3: is a perspective view of a tube visualizing dimensions of the tube.
- Figure 4: is a photo taken by means of a microscope showing a cross section of a wall formed by a membrane.
- Figure 5: shows correlations between a CO₂ concentration of wine and respective sensory perceptions.
- Figure 6: visualizes the solubility of CO₂ (g/l) in wine depending on temperature and overpressure.
- Figure 7: visualizes the solubility of CO₂ depending on the volume flow of the wine.
- Figure 8: visualizes an outgassing characteristic of white wine depending on the volume flow of wine through the membrane.
- Figure 9: visualizes the batch of alcohol being extracted from wine depending on the volume flow of water as a second fluid.

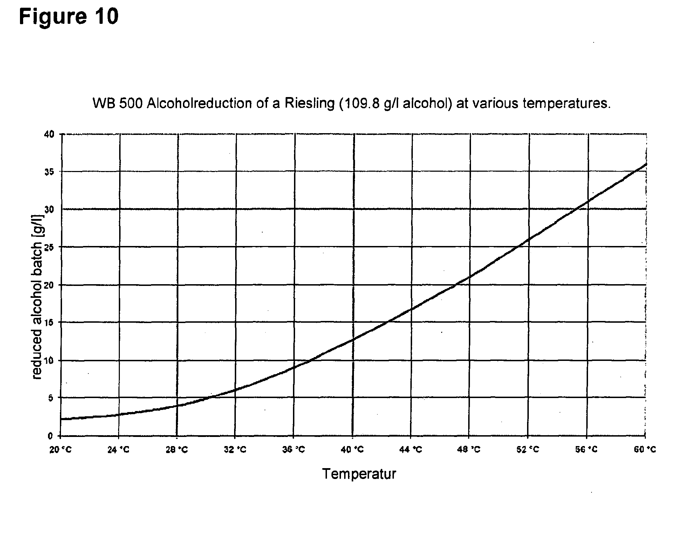

- Figure 10 visualizes: the batch of alcohol being extracted from wine depending on the temperature of the wine.
- Figure 11: is a flow diagram of a device comprising an embodiment of an apparatus according to the present description.

### Detailed description of the drawings

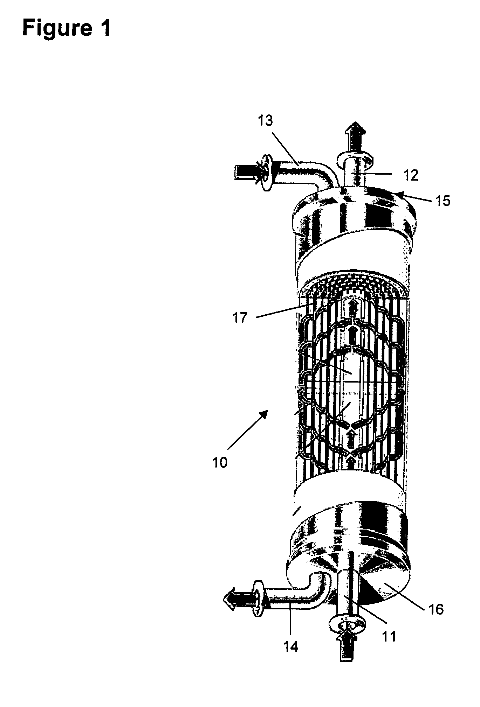

Figure 1 is a perspective view of an apparatus 10 for controlling concentrations of substances within fluids and exchanging substances between fluids. The apparatus 10 substantially has a cylindrical form and provides an input unit 11, 13 and an output unit 12, 14 for each of two fluids, which are arranged at opposing front sides 15, 16 of the cylindrical apparatus 10. This means the input unit 11 for the first fluid and the output unit 14 for the second fluid are arranged at the first front side 16 of the cylindrical apparatus 10. The output unit 12 of the first fluid and the input unit 13 of the second fluid are arranged at the opposing second front side 15 of the apparatus 10. Thus, the first fluid and the second fluid are flowing in a so-called counter flow, as the fluids are flowing in opposite directions. Inside of the apparatus 10 the first fluid flows around tubes 17, which are forming flow channels for the second fluid. The tubes 17 themselves are arranged in a parallel direction to the longitudinal axis of the apparatus 10.

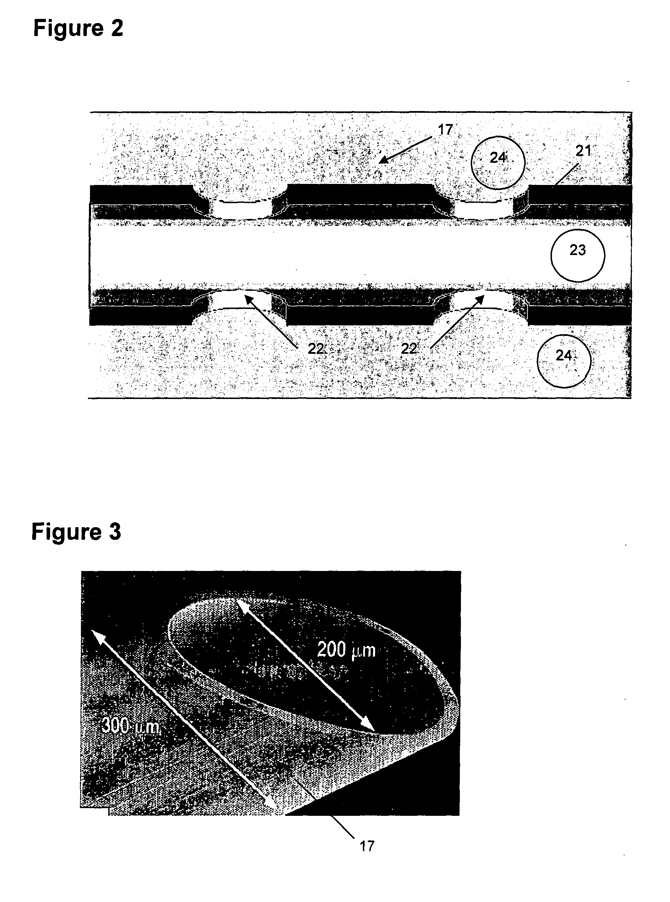

Figure 2 is longitudinal cross section of the tube 17, wherein a wall 21 is formed by a membrane. Inside of the tube 17 the second fluid is guided trough the apparatus 10. The membrane forming the wall 21 of the tube 17 provides pores 22 to allow substances being in a gaseous state to pass through the membrane either from the first fluid to the second fluid at an inner side 23 of the membrane or in the opposite direction. The first fluid is flowing at an outer side 24 of the membrane and of the tube 17, respectively.

Figure 3 is a perspective view of the tube 17 and visualizes the dimensions of the tube 17.

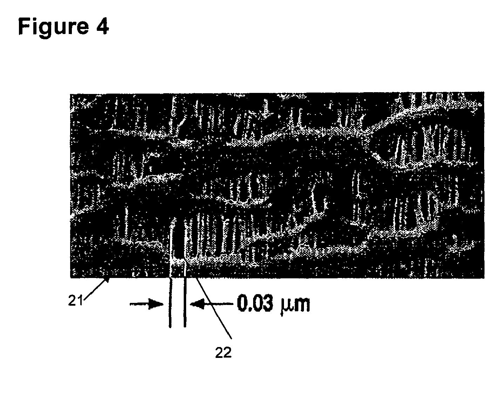

Figure 4 shows a photo taken by means of a microscope and shows a cross section of the wall 21 formed by the membrane. The membrane is provided with pores, which for example can have an inner diameter of 0.03µm.

Figure 5 shows correlations between CO₂ concentrations of wine and the respective sensory perceptions. The sensory perceptions are combinations of attributes such as cloudy, harmonized, lifely and fresh and tart.

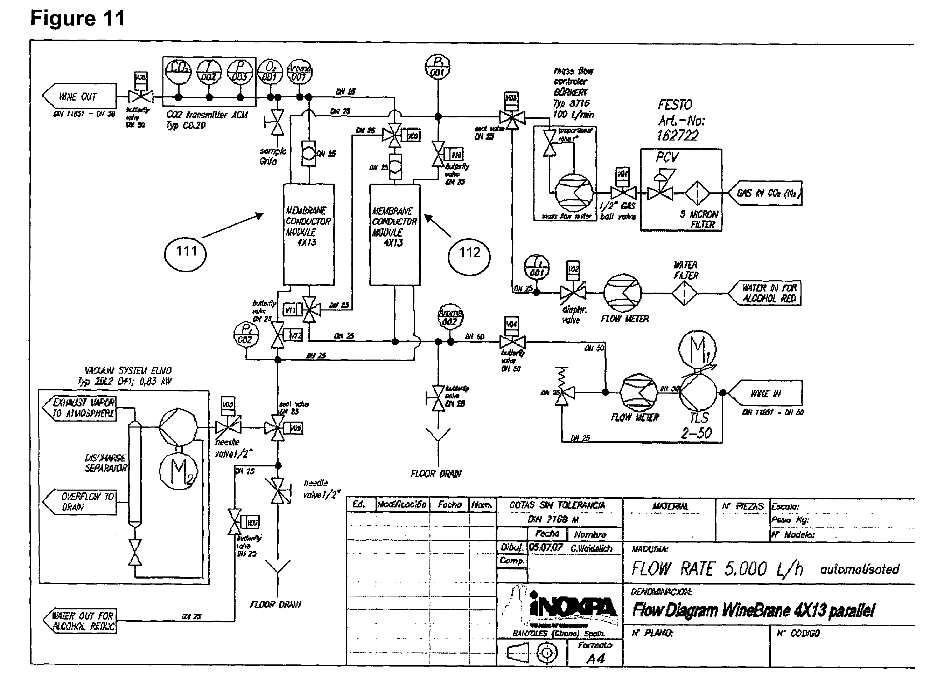

Figure 11 is a flow diagram of a device which comprises two apparatuses 111, 112 according to the present description. The apparatuses 111, 112 are identified as "Membrane Conductor Modules" and are connected with each other in a serial and/or parallel arrangement. By means of switches and valves the modules can selectively be connected to provide either a parallel or a serial arrangement. According to the serial arrangement an output unit of the first module (apparatus) is connected to an input unit of a second module (apparatus) and the first fluid is passing through the first module and afterwards through the second module. In contrast to this, the parallel arrangement of both modules allows a parallel treatment of the first fluid.

## Claims

1. A method for exchanging substances being in a gaseous state between at least two fluids, namely a first fluid and a second fluid, the method comprising the steps of:
using wine as the first fluid,
using CO₂ as the second fluid,
adjusting a pressure difference between at least one first flow channel of the first fluid and at least one second flow channel of the second fluid for allowing CO₂ to pass through membranes into the first fluid,
measuring a CO₂ concentration within the first fluid by means of at least one CO₂-measuring sensor,
adjusting an amount of CO₂ which is passing through the membranes by regulating mass flows, temperatures and/or pressures of the first fluid and CO₂, respectively.

2. The method according to claim 1, the method further comprising the step of automatically adjusting the amount of CO₂ by a controlling system by comparing the values measured by the CO₂-measuring sensor with corresponding predefined specifications.

3. The method according to claims 1 or 2, the method further comprising the step of
adjusting a lower pressure to the second fluid than to the first fluid to cause solute CO₂ in the first fluid to pass through the membranes into the second fluid.

4. The method according to claims 1 or 2, the method further comprising the step of
adjusting a higher pressure to the second fluid than to the first fluid to cause CO₂ to pass through the membranes from the second fluid into the at least one first flow channel of the first fluid.

5. The method for exchanging substances being in a gaseous state between at least two fluids, namely a first fluid and a second fluid, comprising the steps of:
using wine as the first fluid,
using water as the second fluid,
adjusting a temperature and/or a mass flow of the first fluid to allow alcohol within the first fluid to pass through membranes into the second fluid.

6. The method according to claim 5, the method further comprising the step of
performing an aroma analysis via a "Bukanter" aroma sampling system for verifying a concentration of alcohol within the first fluid and for adjusting the temperature and/or the mass flow of the first fluid.

7. The method for exchanging substances being in a gaseous state between at least two fluids, namely a first fluid and a second fluid, comprising the steps of:
using wine as the first fluid,
using CO₂ or water as the second fluid,
adjusting a lower pressure to the second fluid than to the first fluid to cause solute acetic acid within the first fluid to pass through membranes into the second fluid.
and/or
adjusting a temperature and/or a mass flow of the first fluid to allow acetic acid within the first fluid to pass through membranes into the second fluid.

8. The method according to claim 7, the method further comprising the step of
performing an aroma analysis via a "Bukanter" aroma sampling system for verifying a concentration of acetic acid within the first fluid and for adjusting the pressure and/or the temperature and/or the mass flow of the first fluid.

9. An apparatus for controlling concentrations of substances within at least two fluids and for exchanging substances between at least two fluids, the apparatus comprising:
at least one input unit (11, 13) and at least one output unit (12, 14) for each of the at least two fluids, respectively,
a number of flow channels connecting the at least one input unit (11, 13) and the at least one output unit (12, 14) of each of the at least two fluids, respectively and
semi-permeable membranes, which are representing walls (21) of the flow channels to separate the flow channels and which are arranged between the flow channels of the at least two fluids to build an exchanging surface for the substances to be exchanged between the at least two fluids, wherein the membranes are hydrophobic and exclusively permeable for substances being in a gaseous state, and wherein a pressure difference is adjustable between the respective flow channels of the at least two fluids.

10. The apparatus according to claim 9, wherein the apparatus (10) substantially has a cylindrical form and the flow channels are arranged to substantially guide the at least two fluids along a longitudinal axis of the apparatus.

11. The apparatus according to claim 10, wherein the at least one input unit (11, 13) and the at least one output unit (12, 14) for each of the at least two fluids are arranged at opposing front sides (15, 16) of the cylindrical apparatus (10), respectively.

12. The apparatus according to any of claims 9 to 11, wherein the number of flow channels for at least one of the at least two fluids are formed as tubes (17) and wherein walls (21) of the tubes (17) are formed by the membranes.

13. The apparatus according to claim 12, wherein at least a first fluid of the at least two fluids flows around the tubes (17).

14. The apparatus according to any of claims 9 to 13, wherein the membranes consist of polypropylene.

15. The apparatus according to any of claims 9 to 14, wherein mass flows of the at least two fluids are independently adjustable.

16. The apparatus according to any of claims 9 to 15, wherein temperatures of the at least two fluids are independently adjustable.

17. The apparatus according to any of claims 9 to 16, wherein the apparatus comprises a CO₂ measuring sensor.

18. The apparatus according to any of claims 9 to 17, wherein the apparatus (10) comprises a "Bukanter" aroma sampling system for automated "in-line"-sampling for an aroma analysis.

19. The apparatus according to claims 17 or 18, wherein the apparatus (10) comprises a controlling system for controlling an exchange of substances between the at least two fluids and wherein the controlling system is connected to the CO₂ measuring sensor and the "Bukanter" aroma sampling system.

20. The apparatus according to any of claims 9 to 19, wherein the first fluid is wine and the second fluid can be chosen from a group comprising CO₂, water or vacuum.

21. A device for controlling concentrations of substances within fluids and exchanging substances between fluids, the device comprising a plurality of apparatuses (10) according to any one of claims 9 to 20, wherein the apparatuses (10) can be connected to each other in a serial and/or parallel arrangement.
